Europäisches Patentamt

**European Patent Office**

**Office européen des brevets**

(11) Veröffentlichungsnummer : **0 137 341**
**B1**

(19)

(12)

# EUROPÄISCHE PATENTSCHRIFT

(45) Veröffentlichungstag der Patentschrift :
30.09.87

(51) Int. Cl.⁴ : **B 62 D 33/06**

(21) Anmeldenummer : **84110921.8**

(22) Anmeldetag : **13.09.84**

(54) **Nutzfahrzeug mit abgedichtetem kippbarem Fahrerhaus.**

(30) Priorität : **24.09.83 DE 8327534 U**

(43) Veröffentlichungstag der Anmeldung :
**17.04.85 Patentblatt 85/16**

(45) Bekanntmachung des Hinweises auf die Patenterteilung : **30.09.87 Patentblatt 87/40**

(84) Benannte Vertragsstaaten :
**AT DE FR GB IT NL SE**

(56) Entgegenhaltungen :
**EP-A- 0 065 581
DE-B- 2 033 900
DE-U- 1 973 800
DE-U- 8 327 534**

(73) Patentinhaber : **Iveco Magirus Aktiengesellschaft
Schillerstrasse 2
D-7900 Ulm/Donau (DE)**

(72) Erfinder : **Bayer, Ulrich
Am Hägle 4
D-7801 Lonsee-Urspring (DE)**

(74) Vertreter : **Socha, Peter
Iveco Magirus AG Postfach 2740 Schillerstrasse 2
D-7900 Ulm (DE)**

Jouve, 18, rue St-Denis, 75001 Paris, France

**Beschreibung**

Die Erfindung betrifft ein Nutzfahrzeug mit abgedichtetem kippbarem Fahrerhaus gemäß Oberbegriff des Anspruchs 1 (siehe DE-B-2 033 900).

Bei einem kippbaren Fahrerhaus eines Nutzfahrzeuges ist es problematisch, dieses in ausreichender Weise gegenüber dem Fahrgestell zu isolieren bzw. abzudichten, und zwar im Hinblick auf Wasser, Schmutz, etc. sowie im Hinblick auf Schall oder Motoren- bzw. Fahrgeräusche, die gegenüber dem Fahrerhausinnern abzudämmen sind. Dies gilt besonders für den Bereich der Verriegelungseinrichtung zwischen kippbarem Fahrerhaus und zugehörigem Fahrgestell. Die Wege eines fahrerhausfesten Fanghakens zum Fahrgestell sind bei einem Kippvorgang sehr groß, auch der eigentliche Auslenkweg des Hakens selbst, wenn dieser in seine fahrgestellfeste Aufnahme einrastet. Aufgrund der großen Fanghakenwege müssen fahrerhausseitig und fahrgestellseitig Verkleidungs- und Isolationsbereiche in deutlichem Abstand zum Wirkbereich des Fanghakens gehalten werden, was konstruktionsmäßig bei einem kompakten Aufbau eines Nutzfahrzeugs Schwierigkeiten bereitet. Werden Isolations- und Verkleidungsteile des Fahrzeugs in die Nähe des Fanghakens gerückt, so kann ein beispielsweise voll in der Entriegelungsstellung sich befindlicher schwenkbarer Fanghaken bei einem Kippvorgang des Fahrerhauses unter Umständen an diesen Bereichen scheuern, was mithin die Lebensdauer derartiger Verkleidungs- und Isolationsteile beeinträchtigt. Sieht man scheuerfestes Dichtmaterial vor, so erhöht dies die Fertigungskosten.

Aus DE-B-2 033 900 ist eine Verriegelungseinrichtung für kippbare Fahrerhäuser von Lastkraftwagen bekannt, deren fahrerhausseitiger Fanghaken sowie die zugehörige fahrgestellfeste Fanghakenaufnahme in separaten Gehäusen untergebracht sind. Beide Gehäuse liegen bei einem verriegelten Fahrerhaus dient aneinander an. Insoweit ist bei der bekannten Verriegelungseinrichtung durchaus ein Fahrerhaus gegenüber dem Fahrgestell im Bereich der Verriegelungsstelle abgedichtet. Auch die Geräuschdämmung ist einigermaßen zufriedenstellend gelöst. Die bekannte Anordnung ist jedoch vergleichsweise aufwendig getroffen, insbesondere durch die Ausbildung zweier separater Gehäuse, die vergleichsweise sperrig sind, da die Einzelheiten der Verriegelungseinrichtung jeweils im Innern der Gehäuse aufgenommen werden müssen. Von einem kompakten Aufbau kann mithin nicht die Rede sein. Obgleich der Aufbau vergleichsweise voluminös getroffen ist, benötigt die bekannte Verriegelungsvorrichtung in den Gehäusen seitliche Öffnungen, um dem Fanghaken in beiden Gehäusen hinreichende Verschwenkmöglichkeit bei einem Verriegelungsvorgang einzurichten. Derartige Öffnungen beeinträchtigen eine Wasserabdichtung und Geräuschdämmung und sind insbesondere Eintrittsöffnungen für Schmutz und Regenwasser in die Gehäuse der Verriegelungseinrichtung, deren Funktion und Lebensdauer mithin beeinträchtigt.

Aufgabe der Erfindung ist die Schaffung eines Nutzfahrzeuges mit kippbarem Fahrerhaus, dessen Verriegelungseinrichtung sehr einfach und kompakt aufgebaut und dennoch eine ausreichende Isolation gegenüber Wasser, Schmutz und Geräusche bei einem mit dem Fahrgestell verriegelten Fahrerhaus gegeben ist.

Gelöst wird die der Erfindung zugrundeliegende Aufgabe dadurch, daß der einen Schwenkarm und einen Hakeneingriffsteil umfassende Fanghaken am Schwenkarm oder als Schwenkarm selbst ein plattiges Isolationselement aufweist, das bei einem verriegelten Haken gegen das eigentliche Fahrerhaus und das Fahrgestell abdichtet. Die Isolations- und Verkleidungsteile im Bereich der Verriegelungseinrichtung werden somit erfindungsgemäß am beweglichen Fanghaken selbst angeordnet, können mithin von diesem nicht abgescheuert werden. Da das plattige Isolationselement jede Bewegung des Fanghakens mit vollzieht, sind sperrige Gehäuse wie nach dem Stand der Technik entbehrlich. Fanghaken und Isolationsplatte sind vergleichsweise schlanke Bauteile. Auch ist die Beweglichkeit des Fanghakens im Betrieb nicht beeinträchtigt. Dies gilt sowohl für das Kippen des Fahrerhauses wie für den eigentlichen Verriegelungsvorgang. Das plattige Isolationselement ist gemäß der Erfindung vorzugsweise zumindest über die gesamte Schwenkarmlänge des Hakens ausgebildet. Gleichwohl kann der eigentliche Anlenkbereich des schwenkbaren Fanghakens außerhalb des Bereichs des plattigen Isolationselements liegen, wenn der Anlenkbereich des Hakens genügend tief im Innern des Fahrerhauses angeordnet ist.

Bevorzugt erstreckt sich das plattige Isolationselement über den Hakeneingriffsteil hinaus in Richtung Fahrgestell des Fahrzeugs, um dort einen Dichtungs- und Isolationsanschluß mit zugehörigen Teilen des Fahrgestells herzustellen, wenn das Fahrerhaus durch den Fanghaken verriegelt ist. Eine sehr gute Geräuschdämmung bei einem kompakten leichtgewichtigen Aufbau ist gegeben, wenn das plattige Isolationselement ein im wesentlichen kapselförmiges Element mit innerem Hohlraum ist.

Zweckmäßigerweise kann zusätzlich am kapselförmigen Element hakeneingriffsteilseitig eine dicht anschließende befestigte Dichtplatte vorgesehen sein. In diesem Fall übernimmt die Dichtplatte die Abdichtung gegenüber Wasser, Schmutz, etc. und das kapselförmige Element die Abdichtung gegenüber Geräusche und Wärme bzw. Kälte. Entsprechend werden die Materialien der Dichtplatte und des kapselförmigen Elements gewählt.

Ein besonders kompakter Aufbau ist gegeben, wenn in vorteilhafter Weiterbildung der Erfindung das kapselförmige Element stabil ausgebildet ist und selbst den Schwenkarm des Fanghakens bildet, wobei der stabile Hakeneingriffsteil fest am freien Schwenkarmende seitlich befestigt ist, beispielsweise durch Schweißen.

In alternativer Ausgestaltung kann aber auch im kapselförmigen Element der stabile Schwenkarm (Hakenrücken) des Fanghakens zumindest teilweise aufgenommen und das kapselförmige Element am Schwenkarm befestigt sein, wobei der Hakeneingriffsteil des Fanghakens durch die Seite des kapselförmigen Elements in abgedichteter Weise vorsteht, um mit der fahrgestellseitigen Hakenaufnahme in Eingriff gebracht zu werden.

Eine weitere erfindungsgemäße Ausgestaltung sieht vor, daß der einstückig mit dem Hakeneingriffsteil ausgebildete plattige Schwenkarm (Hakenrücken) die hakeneingriffsteilseitige Wand des kapselförmigen Elements ist.

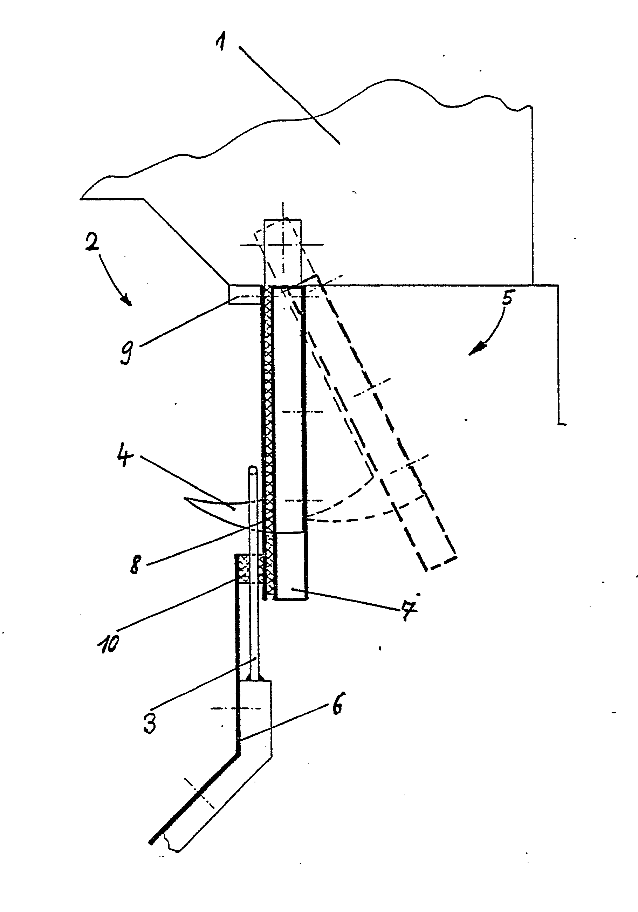

Die Erfindung wird nachfolgend anhand eines Ausführungsbeispiels unter Bezugnahme auf die aus einer einzigen Figur bestehende Zeichnung näher erläutert.

In der Zeichnung ist in einer schematischen vertikalen Querschnittsansicht der Bereich der Verriegelungseinrichtung eines kippbaren Fahrerhauses eines Nutzfahrzeuges veranschaulicht.

Das Fahrerhaus 1 kann um eine in der Zeichnung nicht veranschaulichte Querachse bei entriegelter Verriegelungseinrichtung in bezug auf das Fahrgestell 6 des Fahrzeugs nach vorne gekippt werden. In der Zeichnung befindet sich das Fahrerhaus 1 in der verriegelten Lage.

Die Verriegelungseinrichtung umfaßt einen fahrerhausseitig angelenkten schwenkbaren Fanghaken 2 mit einem Hakeneingriffsteil 4, der in eine fahrgestellfeste Hakenaufnahme 3 in Form einer rahmenfesten Öse (Bügel) in Eingriff bringbar ist. Die Hakenaufnahme 3 ist in geeigneter Weise am Fahrgestell 6 befestigt.

Der Fanghaken 2 besitzt — abgesehen von seinem Anlenkbereich im Fahrerhaus 1 sowie von seinem Hakeneingriffsteil 4 — ein plattiges Isolationselement 5 in Form eines im wesentlichen geschlossenen kapselförmigen Elements 7 mit innerem Hohlraum. Die gesamte hakeneingriffsteilseitige Fläche des kapselförmigen Elements 7 ist mit einer Dichtplatte 8 abgedeckt und geeignet befestigt. Dichtplatte 8 und kapselförmiges Element 7 erstrecken sich über den Hakeneingriffsteil 4 hinaus in Richtung Fahrgestell 6, um an einer in bezug auf das Hakeneingriffsteil 4 tiefer gelegenen Stelle des Fahrzeugs mit einer Abdichtung 10 des Fahrgestells 6 eingreifen zu können. Die Hakenaufnahme 3 durchsetzt im wesentlichen in Vertikalrichtung die Abdichtung 10 des Fahrgestells, welche bei einem verriegelten Fahrerhaus 1 dicht gegen den unteren zugewandten Seitenbereich der Dichtplatte 8 anliegt. Bei einem verriegelten Fahrerhaus 1 liegt ein oberer fahrerhausseitiger Seitenbereich der Dichtplatte 8 dicht an einer zugehörigen fahrerhausfesten Abdichtung 9 an. Mithin sind bei einem verriegelten Fahrerhaus 1 eine vollständige Abdichtung gegen Schmutz und Wasser sowie eine gute Geräuschdämmung im Bereich der Verriegelungseinrichtung gegeben.

## Patentansprüche

1. Nutzfahrzeug mit abgedichtetem kippbarem Fahrerhaus (1), mit schwenkbar am Fahrerhaus angeordnetem Fanghaken (2), der in eine fahrgestellfeste Hakenaufnahme (3) mit Abdichtung gegenüber dem Fahrerhaus in einen Verriegelungseingriff bringbar ist, dadurch gekennzeichnet, daß der einen Schwenkarm und einen Hakeneingriffsteil (4) umfassende Fanghaken (2) am Schwenkarm oder als Schwenkarm selbst ein plattiges Isolationselement (5) aufweist, das bei einem verriegelten Haken (2) gegen das eigentliche Fahrerhaus (1) und das Fahrgestell (6) abdichtet.

2. Nutzfahrzeug nach Anspruch 1, dadurch gekennzeichnet, daß das plattige Isolationselement (5) ein im wesentlichen geschlossenes kapselförmiges Element (7) mit innerem Hohlraum ist.

3. Nutzfahrzeug nach Anspruch 1 oder 2, dadurch gekennzeichnet, daß das plattige Isolationselement (5) sich über den Hakeneingriffsteil (4) hinaus in Richtung Fahrgestell (6) erstreckt.

4. Nutzfahrzeug nach Anspruch 2 oder 3, dadurch gekennzeichnet, daß das kapselförmige Element (7) hakeneingriffsteilseitig eine dicht anschließende befestigte Dichtplatte (8) aufweist.

5. Nutzfahrzeug nach Anspruch 4, dadurch gekennzeichnet, daß am Fahrerhaus (1) eine Abdichtung (9) und am Fahrgestell (6) eine Abdichtung (10) zum Zusammenwirken mit der Dichtplatte (8) befestigt sind.

6. Nutzfahrzeug nach einem der Ansprüche 3 bis 5, dadurch gekennzeichnet, daß sich die am Fahrgestell (6) befestigte Abdichtung (10) im sich über den Hakeneingriffsteil (4) hinaus in Richtung Fahrgestell (6) erstreckenden Bereich des plattigen Isolationselements (5) befindet.

7. Nutzfahrzeug nach Anspruch 6, dadurch gekennzeichnet, daß die am Fahrgestell (6) befestigte Abdichtung (10) von der Hakenaufnahme (3) durchsetzt ist.

## Claims

1. A commercial vehicle with a sealed tippable driver's cabin (1) having a latching hook (2) which is pivotably arranged on the driver's cabin and which can be brought into locking engagement with a hook-holding fixture (3) fast with the vehicle chassis and sealing against the driver's cabin, characterised in that the latching hook (2), comprising a pivot arm and a hook-engagement part (4), is provided on the pivot arm or as the pivot arm itself with a flat insulation element (5) which seals against the actual driver's cabin (1) and the vehicle chassis (6) when a hook (2) is locked.

2. A commercial vehicle according to claim 1, characterised in that the flat insulation element (5) is a substantially closed element (7) of capsule form with an internal cavity.

3. A commercial vehicle according to Claim 1 or 2, characterised in that the flat insulation element (5) extends beyond the hook engagement part (4) in the direction of the vehicle chassis (6).

4. A commercial vehicle according to Claim 2 or 3, characterised in that the element (7) of capsule form comprises, on the side towards the hook engagement part, a tightly adjoiningly-secured sealing panel (8).

5. A commercial vehicle according to Claim 4, characterised in that a seal (9) is secured to the driver's cabin (1) and a seal (10) is secured on the vehicle chassis (6) for co-operation with the sealing panel (8).

6. A commercial vehicle according to any one of Claims 3 to 5 characterised in that a seal (9) secured to the vehicle chassis (6) is situated in the region of the flat insulation element (5) which extends out beyond the hook engagement part (4) in the direction of the vehicle chassis (6).

7. A commercial vehicle according to Claim 6, characterised in that the seal (10) secured to the vehicle chassis (6) is penetrated by the hook-holding fixture (3).

**Revendications**

1. Véhicule utilitaire à cabine de pilotage (1) basculante, avec crochet de fixation (2) articulé fixé à la cabine de pilotage, pouvant être amené dans un logement (3) de crochet fixé au châssis, avec étanchéité vis-à-vis de la cabine de pilotage, dans un dispositif de verrouillage, caractérisé par le fait que le crochet de fixation (2), comprenant un bras articulé et une pièce (4) de prise de crochet, présente sur le bras articulé, ou comme bras articulé lui-même, un élément (5) plat d'isolation qui, dans le cas d'un crochet (2) verrouillé, isole contre la propre cabine de pilotage (1) et le châssis (6).

2. Véhicule utilitaire selon la revendication 1, caractérisé par le fait que l'élément (5) plat d'isolation est un élément (7) en forme de capsule essentiellement fermée, avec un espace creux intérieur.

3. Véhicule utilitaire selon les revendications 1 ou 2, caractérisé par le fait que l'élément (5) plat d'isolation s'étend au-dessus de la pièce (4) de prise de crochet, vers l'extérieur en direction du châssis (6).

4. Véhicule utilitaire selon les revendications 2 ou 3, caractérisé par le fait que l'élément (7) en forme de capsule présente du côté de la pièce de prise de crochet une plaque (8) d'isolation contiguë fixée de façon étanche.

5. Véhicule utilitaire selon la revendication 4, caractérisé par le fait que sur la cabine de pilotage (1) et sur le châssis (6) sont fixées respectivement une étanchéité (9) et une étanchéité (10), pour action combinée avec la plaque (8) d'étanchéité.

6. Véhicule utilitaire selon une des revendications 3 à 5, caractérisé par le fait que l'étanchéité (10) fixée au châssis (6) se trouve dans la zone de l'élément (5) d'isolation s'étendant au-dessus de la pièce (4) de prise de crochet, vers l'extérieur en direction du châssis (6).

7. Véhicule utilitaire selon la revendication 6, caractérisé par le fait que l'étanchéité (10) fixée au châssis (6) est traversée par le logement (3) du crochet.